# EUROPEAN PATENT APPLICATION

(11) **EP 4 814 907 A1**
(43) Date of publication of application: **30.09.2026**
(21) Application number: 25226544.2
(22) Date of filing: 22.12.2025
(51) Int. Cl.: G07C 9/00

(54) **ADJUSTMENT METHOD FOR SENSING-DISTANCE OF CAR WIRELESS CONTROL MODULE**

(30) Priority: 05.11.2025 TW 114143115
(71) Applicant: IVTES LTD., New Taipei City (TW)
(72) Inventor: CHEN, Chi-Ting, New Taipei City (TW)
(74) Representative: Savi, Massimiliano

(57) **Abstract**

The present invention provides an adjustment method for a sensing-distance of a car wireless control module (10). First, a low-shielding-mode distance and a high-shielding-mode distance are selected. Then, based on a notification from the car wireless control module (10), the module is moved to a position that meets the low-shielding or the high-shielding-mode distance. Then, the car wireless control module (10) executes a communication parameter adjustment process of the car wireless control module (10) of the present invention. Once the communication parameter adjustment process is completed, simply move the car wireless control module (10) to a position that meets the low/high-shielding-mode distance, thereby enabling smooth operation of actions such as unlocking/locking and opening the trunk. The method of the present invention overcomes influences of different heat insulation films affixed on vehicles windows towards the car wireless control module (10), thereby the objective of the present invention can be achieved.

## Description

The present invention relates to vehicle digital key adjustment technology, particularly to an adjustment method for a sensing-distance of a car wireless control module (10).

Nowadays, during actual vehicle use, car owners often install car heat insulation films of various materials and different grades based on personal needs or aesthetic considerations. Because the physical properties and metal composition ratios of the car heat insulation film vary, the degree of penetration of electromagnetic waves or wireless signals differs accordingly. Consequently, this may produce varying degrees of signal shielding for the vehicle's wireless car keys. This signal shielding directly affects the wireless connection range when users lock or unlock their vehicles, leading to differences in user experience due to excessively short or long unlocking distances. Consequently, a challenge in this field is to determine how to adjust the settings of the wireless car key to overcome the impact of different heat insulation films, according to their specific characteristics.

In view of the above-mentioned issue of existing car heat insulation films causing varying degrees of signal shielding to signals from the wireless control module used in vehicles, the present invention provides an adjustment method for a sensing-distance of a car wireless control module (10) having two adjustable communication parameters: transmission power and repeat transmission count. The car wireless control module (10) performs the following steps:
notifying a user via a text or voice prompt to move the car wireless control module (10) to a low-shielding-mode distance away from a wireless transceiver module (20);
determining whether the car wireless control module (10) is properly connected to the wireless transceiver module (20);
when the car wireless control module (10) is not properly connected to the wireless transceiver module (20), determining whether the transmission power of the car wireless control module (10) is at a highest level;
when the car wireless control module (10) is properly connected to the wireless transceiver module (20), setting the car wireless control module (10) to use a low-shielding mode and terminating the process;
when the transmission power of the car wireless control module (10) is not at the highest level, increasing the transmission power by one level, then determining whether the car wireless control module (10) is properly connected to the wireless transceiver module (20);
when the transmission power of the car wireless control module (10) is at the highest level, notifying the user via the text or voice prompt to move the car wireless control module (10) to a high-shielding-mode distance away from the wireless transceiver module (20);
determining whether the car wireless control module (10) is properly connected to the wireless transceiver module (20);
when the car wireless control module (10) is not properly connected to the wireless transceiver module (20), determining whether the repeat transmission count of the car wireless control module (10) is at the highest level;
when the car wireless control module (10) is properly connected to the wireless transceiver module (20), setting the car wireless control module (10) to operate in a high-shielding mode and terminating the process;
when the repeat transmission count of the car wireless control module (10) is not at the highest level, increasing the repeat transmission count by one level, then determining whether the car wireless control module (10) is properly connected to the wireless transceiver module (20);
when the repeat transmission count of the car wireless control module (10) is already at the highest level, notifying the user that the car wireless control module (10) cannot be adjusted, and terminating the process.

Furthermore, the present invention provides another adjustment method for a sensing-distance of a car wireless control module (10) that only has the adjustable communication parameters for transmission power, wherein the car wireless control module (10) performs the following steps:
notifying a user via a text or voice prompt to move the car wireless control module (10) to a low-shielding-mode distance away from a wireless transceiver module (20);
determining whether the car wireless control module (10) is properly connected to the wireless transceiver module (20);
when the car wireless control module (10) is not properly connected to the wireless transceiver module (20), determining whether the transmission power of the car wireless control module (10) is at the highest level;
when the car wireless control module (10) is properly connected to the wireless transceiver module (20), setting the car wireless control module (10) to use a low-shielding mode and terminating the process;
when the transmission power of the car wireless control module (10) is not at the highest level, increasing the transmission power by one level, then determining whether the car wireless control module (10) is properly connected to the wireless transceiver module (20);
when the transmission power of the car wireless control module (10) is at the highest level, notifying the user via a text or voice prompt to move the car wireless control module (10) to a high-shielding-mode distance away from the wireless transceiver module (20);
when the car wireless control module (10) is normally connected to the wireless transceiver module (20), setting the car wireless control module (10) to use a high-shielding mode;
when the car wireless control module (10) cannot establish a normal connection with the wireless transceiver module (20), notifying the user via the text or voice prompt that the car wireless control module (10) cannot be adjusted, and terminating the process.

The present invention provides an adjustment method for a sensing-distance of a car wireless control module (10). A user first selects and inputs a low-shielding-mode distance and a high-shielding-mode distance to the car wireless control module (10), and then, according to the notification from the car wireless control module (10), moves the car wireless control module (10) to a position that matches the low-shielding-mode distance. Then, the car wireless control module (10) executes the above-mentioned processes for adjusting the communication parameters of the car wireless control module (10). When the car wireless control module (10) is set to use the low-shielding mode, the communication parameter adjustment of the car wireless control module (10) is completed. Afterwards, simply moving the car wireless control module (10) to a position that matches the low-shielding-mode distance can enable smooth operation of actions such as unlocking/locking/opening the trunk. If the car wireless control module (10) is set to use the high-shielding mode, the communication parameter adjustment of the car wireless control module (10) is also completed. Afterwards, simply moving the car wireless control module (10) to a position that matches the high-shielding-mode distance can enable smooth operation of actions such as unlocking/locking/opening the trunk. When the car wireless control module (10) notifies the user via the text or voice prompt that the car wireless control module (10) cannot be adjusted, the user can reselect and input a smaller low-shielding-mode distance and a smaller high-shielding-mode distance, and repeat the above processes until a feasible high-shielding-mode distance or a low-shielding-mode distance is accepted, thus achieving the purpose of the present invention.

In order to make the above objects, features and advantages of the present invention more apparent and easier to understand, the following embodiments, together with the accompanying drawings, are described in detail as follows.

### In the drawings:

FIG. 1 illustrates a schematic diagram of an initial scenario for the adjustment method for a sensing-distance of a car wireless control module (10) of the present invention;
FIG. 2 illustrates a schematic diagram of an embodiment scenario for the adjustment method of the present invention;
FIG. 3 illustrates a flowchart of an embodiment for the adjustment method of the present invention; and

FIG. 4 illustrates a flowchart of another embodiment for the adjustment method of the present invention.

The technical contents, features and effects of the present invention will be clearly presented in the following detailed description of the preferred embodiment with reference to the drawings. In addition, the directional terms mentioned in the following embodiments, such as: up, down, left, right, front, back, bottom, top, etc., are only relative directions with reference to the drawings, and do not represent absolute directional positions; therefore, the directional terms used are for the convenience of illustrating their relative positional relationships, and are not intended to impose limitations on the present invention.

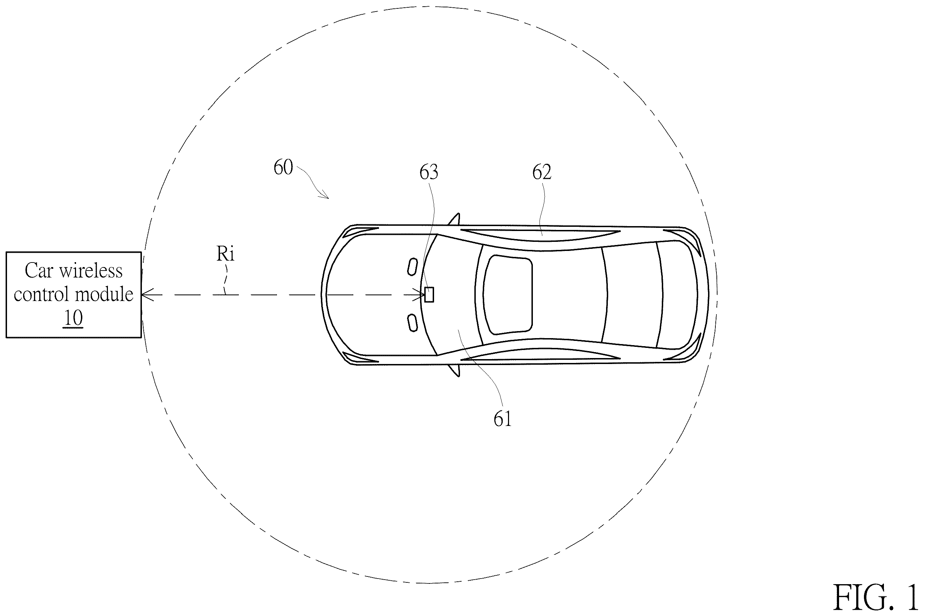

Please refer to FIG. 1, which shows a car 60. The car 60 has a windshield 61 and a plurality of car glass windows 62. The car 60 also has a wireless transceiver module 20 installed inside. This wireless transceiver module 20 can establish a wireless connection with a car wireless control module 10 located outside the car via an initial setting. The car wireless control module 10 functions similarly to a car key FOB or a mobile device (such as a cell phone) with the car key FOB function. Thus, a user can operate the car wireless control module 10 to perform actions such as unlocking/locking the doors, turning on the lights, or opening the trunk (not shown) within an initial distance Ri away from the car 60. In one embodiment, the wireless connection can be Bluetooth, Near Field Communication (NFC), or Ultra-wideband (UWB) wireless technology.

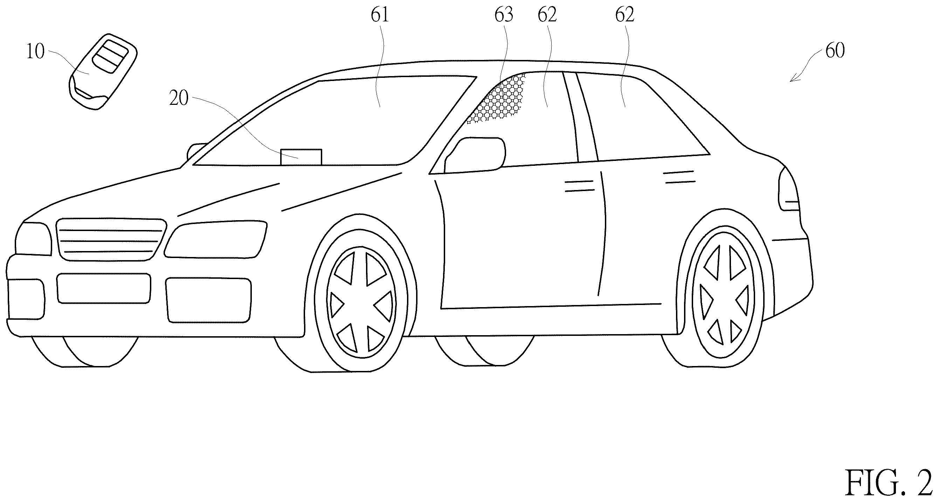

FIG. 2 shows that the car 60 has an additional car heat insulation film 63 affixed to multiple surfaces of the windshield 61 and the plurality of car glass windows 62 to block sunlight, prevent peeping, or enhance aesthetics. Because the car heat insulation film 63 obstructs the penetration of electromagnetic waves, when a user operates the car wireless control module 10 at the initial distance Ri away from the car 60, the car wireless control module 10 cannot properly connect wirelessly with the wireless transceiver module 20. In this case, the user must move the car wireless control module 10 closer to the wireless transceiver module 20 of the car 60 or adjust at least one communication parameter of the car wireless control module 10, so as to restore the normal wireless connection between the car wireless control module 10 and the wireless transceiver module 20. To address this, the present invention proposes a low-shielding adjustment mode and a high-shielding adjustment mode for adjusting the car wireless control module 10 respectively, and thereby overcoming the obstruction of electromagnetic waves by the car heat insulation film 63 and restoring the wireless connection between the car wireless control module 10 and the wireless transceiver module 20.

In one embodiment, the car wireless control module 10 comprises at least two adjustable communication parameters, namely, a transmission power and a repeat transmission count. The transmission power is divided into levels from a first to an N-th level in ascending order, where the first level represents the minimum transmission power and the N-th level represents the maximum transmission power. Similarly, the repeat transmission count is divided into levels from a first to an M-th level in ascending order, where the first level repeat transmission count is the smallest and the M-th level repeat transmission count is the greatest. Both M and N are integers greater than or equal to 2. The car wireless control module 10 has an antenna. The transmission power refers to power of the antenna's transmitted signal. Generally speaking, a higher transmission power from a sending antenna makes it easier for a receiving end to correctly receive the wireless signal transmitted from the sending end. The repeat transmission count indicates the number of times a data is repeatedly transmitted. Whenever allowed by the communication protocol, repeatedly transmitting the same data multiple times enhances the success rate of data reception between the car wireless control module 10 and the wireless transceiver module 20. For example: Bluetooth 5.0 Low Energy Coded PHY employs a Forward Error Correction (FEC) algorithm which extends transmission range without increasing power consumption. The FEC algorithm can repeat a data (e.g. coding symbols) twice (referred to as the S2 scheme) or repeat the data eight times (referred to as the S8 scheme). When M is 1, it indicates that the transmission power cannot be adjusted. When N is 1, it indicates that the repeat transmission count cannot be adjusted.

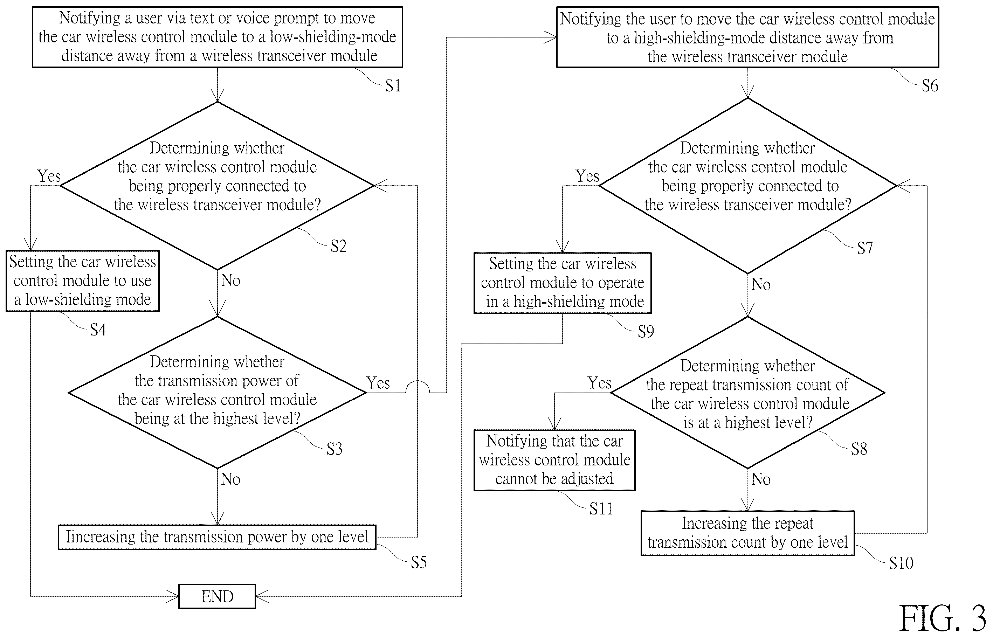

As described above, please refer to FIG. 3. FIG. 3 illustrates an embodiment of the communication parameter adjustment process for the transmission power and the repeat transmission count of the car wireless control module 10 according to the present invention. In this embodiment, the car wireless control module 10 performs the following steps:
Step S1: The application notifies the user by a text or voice prompt to move the car wireless control module 10 to a low-shielding-mode distance away from the wireless transceiver module 20;
Step S2: Determine whether the car wireless control module 10 and the wireless transceiver module 20 are properly connected.
Step S3: When the car wireless control module 10 and the wireless transceiver module 20 are not properly connected, determine whether the transmission power of the car wireless control module 10 is at the highest level (i.e., the highest transmission power).
Step S4: When the car wireless control module 10 and the wireless transceiver module 20 are normally connected, configure the car wireless control module 10 to use a low-shielding mode, which includes: setting the car wireless control module 10 according to a current transmission power level and a current repeat transmission count level, recording a current low-shielding-mode distance, and terminating the process.
Step S5: When the transmission power of the car wireless control module 10 is not at the highest level, increase the transmission power of the car wireless control module 10 by one level, and then determine whether the car wireless control module 10 and the wireless transceiver module 20 are properly connected (S2).
Step S6: When the transmission power of the car wireless control module 10 is at the highest level, the car wireless control module 10 notifies the user by the text or voice prompt to move the car wireless control module 10 to a high-shielding-mode distance away from the wireless transceiver module 20, wherein the high-shielding-mode distance is less than the low-shielding-mode distance.
Step S7: Determine whether the car wireless control module 10 and the wireless transceiver module 20 are properly connected.
Step S8: When the car wireless control module 10 and the wireless transceiver module 20 are not properly connected, determine whether the repeat transmission count of the car wireless control module 10 is at the highest level (i.e., the greatest repeat transmission count).
Step S9: When the car wireless control module 10 and the wireless transceiver module 20 are normally connected, set the car wireless control module 10 to use a high-shielding mode, which includes: setting the car wireless control module 10 according to a current transmission power level and a current repeat transmission count level, recording the current high-shielding-mode distance, and terminating the process.
Step S10: When the repeat transmission count of the car wireless control module 10 is not at the highest level, increase the repeat transmission count of the car wireless control module 10 by one level, and then determine whether the car wireless control module 10 and the wireless transceiver module 20 are properly connected (S7).
Step S11: When the repeat transmission count of the car wireless control module 10 is at the highest level, notify the user that the car wireless control module 10 cannot be adjusted, and terminate the process.

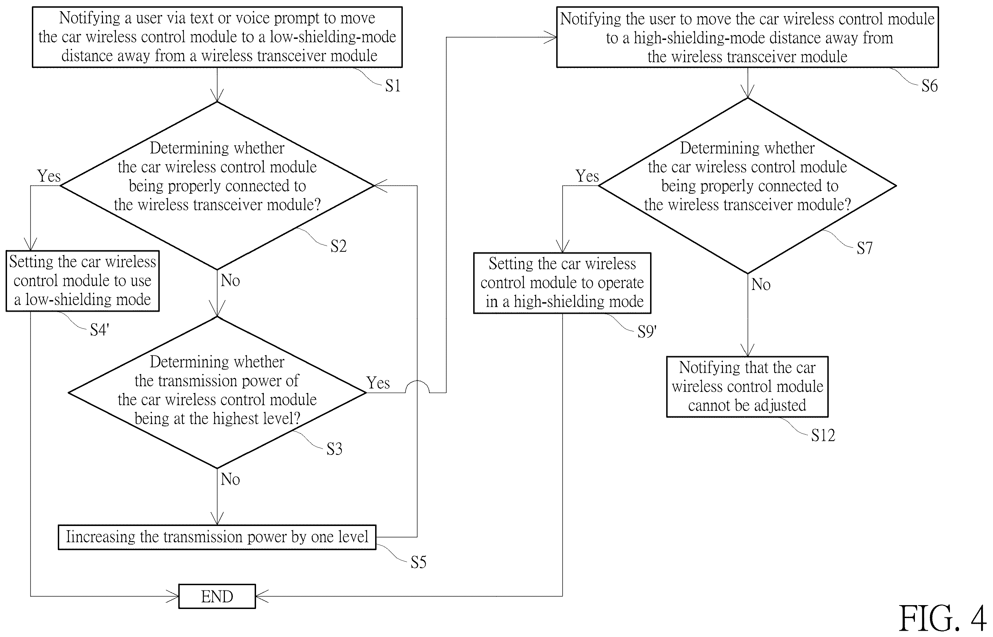

As described above, please refer to FIG. 4. FIG. 4 is another embodiment of the communication parameter process for adjusting the transmission power of the car wireless control module 10 according to the present invention. The only difference between this embodiment and the embodiment in FIG. 3 is that: in this embodiment, only the transmission power of the car wireless control module 10 can be adjusted. In this embodiment, the car wireless control module 10 performs the following steps:
Step S1: The car wireless control module 10 notifies the user by the text or voice prompt to move the car wireless control module 10 to a low-shielding-mode distance away from the wireless transceiver module 20;
Step S2: Determine whether the car wireless control module 10 and the wireless transceiver module 20 are properly connected.
Step S3: When the car wireless control module 10 and the wireless transceiver module 20 are not properly connected, determine whether the transmission power of the car wireless control module 10 is at the highest level (i.e., the highest transmission power).
Step S4': When the car wireless control module 10 and the wireless transceiver module 20 are normally connected, configure the car wireless control module 10 to use a low-shielding mode, which includes: setting the car wireless control module 10 according to a current transmission power level, recording a current low-shielding-mode distance, and terminating the process.
Step S5: When the transmission power of the car wireless control module 10 is not at the highest level, increase the transmission power of the car wireless control module 10 by one level, and then determine whether the car wireless control module 10 and the wireless transceiver module 20 are properly connected (S2).
Step S6: When the transmission power of the car wireless control module 10 is at the highest level, the car wireless control module 10 notifies the user by the text or voice prompt to move the car wireless control module 10 to a high-shielding-mode distance away from the wireless transceiver module 20, wherein the high-shielding-mode distance is less than the low-shielding-mode distance.
Step S7: Determine whether the car wireless control module 10 and the wireless transceiver module 20 are properly connected.
Step S9': When the car wireless control module 10 and the wireless transceiver module 20 are normally connected, set the car wireless control module 10 to use a high-shielding mode, which includes: setting the car wireless control module 10 according to a current transmission power level, recording the current high-shielding-mode distance, and terminating the process.
Step S12: When the car wireless control module 10 and the wireless transceiver module 20 cannot be connected normally, notify that the car wireless control module 10 cannot be adjusted and terminate the process.

In summary, the user may first select and input a low-shielding-mode distance and a high-shielding-mode distance, and then, based on the notification from the car wireless control module 10 via the text or voice prompt, the user moves the car wireless control module 10 to a position that meets the low-shielding-mode distance. Then, by using the car wireless control module 10, the user executes the above-mentioned communication parameter process of the present invention to adjust only the transmission power of the car wireless control module 10 (as shown in FIG. 4), or executes the above-mentioned communication parameter process of the present invention to adjust both the transmission power and the repeat transmission count (as shown in FIG. 3). If the car wireless control module 10 is set to use the low-shielding mode, the adjustment of the communication parameters is completed. Afterward, simply moving the car wireless control module 10 to a position within the low-shielding-mode distance, such as within 15 meters of the vehicle 60, can enable smooth operation of the vehicle 60 via the car wireless control module 10 for actions like unlocking/locking/opening the trunk. If the car wireless control module 10 is set to the high-shielding mode, the adjustment of the communication parameters is also completed. Afterward, simply moving the car wireless control module 10 to a position within the high-shielding-mode distance, such as within 3 meters of the vehicle 60, can enable smooth operation of the vehicle 60 via the car wireless control module 10 for actions like unlocking/locking/opening the trunk. When the car wireless control module 10 notifies the user via the text or voice prompt that no communication parameter of the car wireless control module 10 can be adjusted, the user may select and input smaller values for both the low-shielding-mode distance and the high-shielding-mode distance, then repeat the above processes until a feasible high-shielding-mode distance or a low-shielding-mode distance is found. Thus, the objective of the present invention can be achieved.

## Claims

1. An adjustment method for a sensing-distance of a car wireless control module, **characterized in that**, the car wireless control module (10) performs the following steps:
notifying a user via a text or voice prompt to move the car wireless control module (10) to a low-shielding-mode distance away from a wireless transceiver module (20);
determining whether the car wireless control module (10) is properly connected to the wireless transceiver module (20);
when the car wireless control module (10) is not properly connected to the wireless transceiver module (20), determining whether a transmission power of the car wireless control module (10) is at a highest level;
when the car wireless control module (10) is properly connected to the wireless transceiver module (20), setting the car wireless control module (10) to use a low-shielding mode and terminating the process;
when the transmission power of the car wireless control module (10) is not at the highest level, increasing the transmission power by one level, then determining whether the car wireless control module (10) is properly connected to the wireless transceiver module (20).

2. The adjustment method as claimed in claim 1, the car wireless control module further performing the following steps:
when the transmission power of the car wireless control module (10) is at the highest level, notifying the user via the text or voice prompt to move the car wireless control module (10) to a high-shielding-mode distance away from the wireless transceiver module (20);
determining whether the car wireless control module (10) is properly connected to the wireless transceiver module (20);
when the car wireless control module (10) is not properly connected to the wireless transceiver module (20), determining whether a repeat transmission count of the car wireless control module (10) is at the highest level;
when the car wireless control module (10) is properly connected to the wireless transceiver module (20), setting the car wireless control module (10) to operate in a high-shielding mode and terminate the process;
when the repeat transmission count of the car wireless control module (10) is not at the highest level, increasing the repeat transmission count by one level, then determining whether the car wireless control module (10) is properly connected to the wireless transceiver module (20);
when the repeat transmission count of the car wireless control module (10) is already at the highest level, notifying the user that the car wireless control module (10) cannot be adjusted, and terminating the process.

3. The adjustment method as claimed in claim 1, wherein setting the car wireless control module (10) to use a low-shielding mode includes: setting the car wireless control module (10) based on a current transmission power level and a current repeat transmission count level, and recording the low-shielding-mode distance.

4. The adjustment method as claimed in claim 2, wherein setting the car wireless control module (10) to use the high-shielding mode includes: setting the car wireless control module (10) based on a current transmission power level and a current repeat transmission count level, and recording the high-shielding-mode distance.

5. The adjustment method as claimed in claim 1, the car wireless control module (10) further performing the following steps: wherein, setting the car wireless control module (10) to use the low-shielding mode includes: setting the car wireless control module (10) based on a current transmission power level and recording the low-shielding-mode distance.

6. The adjustment method as claimed in claim 1, the wireless control module further performing the following steps:
when the transmission power of the car wireless control module (10) is at the highest level, notifying the user via the text or voice prompt to move the car wireless control module (10) to a high-shielding-mode distance away from the wireless transceiver module (20);
when the car wireless control module (10) is normally connected to the wireless transceiver module (20), setting the car wireless control module (10) to use a high-shielding mode;
when the car wireless control module (10) cannot establish a normal connection with the wireless transceiver module (20), notifying the user via the text or voice prompt that the car wireless control module (10) cannot be adjusted, and terminating the process.

7. The adjustment method as claimed in claim 6, wherein setting the car wireless control module (10) to use the high-shielding mode comprises: setting the car wireless control module (10) to a current transmission power level, and recording the high-shielding-mode distance.
